# EUROPÄISCHE PATENTSCHRIFT

(11) **EP 1 835 199 B1**
(45) Veröffentlichungstag und Bekanntmachung des Hinweises auf die Patenterteilung: **09.11.2011**
(21) Anmeldenummer: 07003711.4
(22) Anmeldetag: 23.02.2007
(51) Int. Cl.: F16F 9/32, B21C 37/08, B21D 22/06

(54) **Federbeinrohr aus flexibel gewalztem Blech**
Spring leg pipe made of flexibly rolled sheet metal
Tuyau de jambe de force en tôle laminée flexible

(30) Priorität: 14.03.2006 DE 102006012086
(43) Veröffentlichungstag der Anmeldung: 19.09.2007
(73) Patentinhaber: Muhr und Bender KG, 57439 Attendorn (DE); ZF Friedrichshafen AG, 88046 Friedrichshafen (DE)
(72) Erfinder: Kobelev, Vladimir, Dr. rer. nat., 57439 Attendorn (DE); Hauger, Andreas, Dr.-Ing., 57439 Attendorn (DE); Brecht, Jörg Dieter, Dr.-Ing., 57462 Olpe (DE); Stretz, Klaus, 97437 Haßfurt (DE); Schuler, Manfred, Dr.-Ing., 97456 Dittelbrunn/Hambach (DE)
(74) Vertreter: Neumann, Ernst Dieter

(56) Entgegenhaltungen:
- EP-A- 1 190 784
- EP-A- 1 479 458
- EP-A1- 0 788 849
- DE-A1-102004 024 898
- DE-C- 104 875
- GB-A- 2 050 561
- US-A1- 2003 046 803

## Beschreibung

Die Erfindung betrifft ein Federbeinrohr, insbesondere ein äußeres Behälterrohr, für ein Federbein, mit einem Rohrkörper, der an einem ersten Ende eine Öffnung aufweist, die durch einen Boden verschließbar ist, und am anderen Ende eine Öffnung aufweist und mit Abstand zu dieser einen aufgeschobenen Federteller trägt. Federbeinrohre dieser Art dienen als Außenrohr bzw. Behälterrohr von Zweirohrfederbeinen, die mit zusätzlichen Befestigungsmitteln zum Beispiel in Form von angeschweißten Laschen an einem Radträger und/oder an Längs- oder Querlenkern eines Kraftfahrzeuges befestigt werden und auf ihrem Federteller eine Schraubenfeder abstützen. Derartige Zweirohrfederbeine umfassen neben dem hier gegenständlichen Außen- oder Behälterrohr einen darin liegenden Arbeitszylinder, der konzentrisch gegenüber dem Außenrohr gehalten ist, sowie eine Kolbenstange mit einem Kolben, die nach oben aus dem Federbeinrohr austritt und gegenüber dem Arbeitszylinder abgedichtet ist. Zwischen dem Behälterrohr und dem Arbeitszylinder liegt am unteren Ende, das durch einen eingesetzten oder aufgesetzten Boden verschließbar ist, ein Bodenventil, über das beide miteinander kommunizieren, während beide am oberen Ende über einen Ringdeckel fest miteinander verbunden und gegeneinander abgedichtet sind. Der Ringdeckel kann zugleich eine Kolbenstangenführung bilden. Der Kolben hat ein Kolbenventil, mit dem der Arbeitsraum oberhalb des Kolbens mit dem Arbeitsraum unterhalb des Kolbens kommuniziert. In dem Ringraum zwischen Behälterrohr und Arbeitszylinder ist oben ein Gasvolumen eingeschlossen, das durch den Ringdeckel nach außen abgedichtet ist. Am oberen Ende der Kolbenstange wird in der Regel ein elastisches Gummielement befestigt, mit dem das Federbein in einem Federbeindom gelagert wird. An unten angeschlagenen Laschen wird z.B. ein Radträger angeschraubt, so daß das Federbein insbesondere für eine McPherson-Radaufhängung geeignet ist.

Es ist bereits bekannt, Federbeinrohre der genannten Art zum Zwecke des Leichtbaus mit über der axialen Länge variabler Wandstärke auszuführen. Hierzu wird das Federbeinrohr im Tiefziehverfahren hergestellt.

Aus der EP 0 788 849 A1 ist ein Rohr mit in Achsrichtung unterschiedliche Wanddicken aufweisenden Abschnitten bekannt, das durch walzende Verformung des Blechs mit in Walzrichtung bereichsweise wechselnden Blechdicken, zuschneiden des gewalzten Blechs, Umformen des gewalzten Blechs zum Rohr und Fügen der Stoßkanten hergestellt wird.

Aus der DE 10 2004 024 898 A1 ist ein Behälterrohr für einen Schwingungsdämpfer bekannt, das entlang seiner Längsrichtung unterschiedliche Wanddicken aufweist, wobei die Wanddicke eines Rohrendabschnitts größer ist als in einem Mittelabschnitt zwischen den Rohrendabschnitten.

Hiervon ausgehend liegt der vorliegenden Erfindung die Aufgabe zugrunde, ein Federbeinrohr der genannten Art vorzuschlagen, das leicht ausgeführt werden kann und kostengünstig herzustellen ist.

Die Lösung hierfür besteht in einem Federbeinrohr, bei welchem der Rohrkörper aus flexibel gewalztem Flachmaterial mit in Längsrichtung variabler Wandstärke, das quer zur Längsrichtung zum Rohr umgeformt und in Längsrichtung verschweißt ist, hergestellt ist, mit den Merkmalen des Patentanspruchs 1. Mit der Verfahrenstechnik nach dem flexiblen Walzen sind Bänder oder Platinen aus Material mit weitgehend beliebig veränderbarer Wandstärke (d.h. "flexibel gewalzt") kostengünstig herzustellen. Einzelne abgelängte Bandabschnitte oder Platinen können danach quer zur Walzrichtung rundgebogen und entlang einer Längsnaht verschweißt werden, wobei insbesondere auch die Darstellung von über der Länge ungleichmäßigen Querschnitten einfach möglich ist. Ein Verfahren zur Herstellung derartiger Rohrkörper ist in der DE 10 2004 017 343 A1 der Anmelderin beschrieben. Hierbei ist insbesondere ausgeführt, daß das abgelängte Bandmaterial zunächst quer zur Längsachse tiefgezogen wird, danach die Seitenkanten beschnitten werden und anschließend ein Rundbiegen und Zuschweißen des Rohrkörpers erfolgt. Sofern hierbei von den Seitenkanten ein Stoß entlang einer geraden Mantellinie des Rohrkörpers gebildet wird, ist der Verschweißvorgang besonders günstig und prozeßsicher auszuführen.

Gemäß der Erfindung ist vorgesehen, daß der Rohrkörper zumindest zwei zylindrische Abschnitte unterschiedlichen Außendurchmessers aufweist, zwischen denen jeweils Übergangsabschnitte liegen.

Darüberhinaus ist gemäß der Erfindung vorgesehen, daß die Achsen der zylindrischen Abschnitte unterschiedlichen Außendurchmessers so gegeneinander versetzt sind, daß die zylindrischen Abschnitte jeweils eine Mantellinie in untereinander fluchtender Anordnung aufweisen, wobei vorzugsweise eine Schweißnaht entlang der zueinander fluchtenden Mantellinien der Abschnitte unterschiedlichen Außendurchmessers verläuft. Hiermit ist der vorgenannte lineare Stoß am Rohrkörper mit einer linearen Schweißnaht unkompliziert zu verschließen.

Eine bevorzugte Ausführung der Erfindung liegt darin, daß die Wandstärke des Rohrkörpers im wesentlichen vom verschließbaren unteren Ende zum offenen oberen Ende abnimmt. Hiermit ist eine günstige Anpassung an das Belastungsprofil im eingebauten Zustand gegeben, bei dem Biegekräfte überwiegen.

Insbesondere wird vorgeschlagen, daß die Wandstärke des Rohrkörpers im wesentlichen derart abnimmt, daß der Verlauf des Widerstandsmoments in Längsrichtung dem Verlauf der Biegebelastungen im Betrieb entspricht. Hiermit ergeben sich in Längsrichtung im wesentlichen konstante Spannungszustände im Rohrkörper bei Belastung im Betrieb. Diese Belastung besteht überwiegend in Biegekräften, die auf den Rohrkörper einwirken.

Es wird insbesondere vorgeschlagen, daß der Rohrkörper an den Enden zylindrische Abschnitte kleineren Außendurchmessers und einen dazwischenliegenden zylindrischen Abschnitt größeren Außendurchmessers aufweist. Hiermit wird ein Abdichten (oben) bzw. ein Verschließen (unten) auf reduziertem Durchmesser möglich bei großem Innenquerschnitt im Führungsbereich des Kolbens.

Nach einer alternativen Ausführung ist vorgesehen, daß die Achsen der an den Enden liegenden Zylinderabschnitte kleineren Außendurchmessers miteinander fluchten. Diese Geometrie wird für manche Anwendungsfälle bevorzugt. Hierbei wird vorgeschlagen, daß die Schweißnaht längs eines Stoßes verläuft, der in einer Radialebene durch die genannten Achsen der Endabschnitte liegt. Auch hiermit wird ein einfaches Schweißen möglich.

Hierbei ist insbesondere vorgesehen, daß einer der an den Enden liegenden Zylinderabschnitte einen kleineren Außendurchmesser hat als der andere und eine umlaufende Durchmesserstufe mit dem dazwischenliegenden Zylinderabschnitt größeren Außendurchmessers bildet. Auf dieser umlaufenden Durchmesserstufe kann der Federteller sich auflegen und gleichmäßig formschlüssig abstützen.

Nach einer weiteren Ausführung unter dem Gesichtspunkt des Leichtbaus ist vorgesehen, daß der Federteller aus Material unterschiedlicher Wandstärke besteht, wobei eine größte Wandstärke im Bereich der Verbindung mit dem Rohrkörper vorliegt. Auch hiermit wird eine Anpassung an das Belastungsprofil im eingebauten Zustand bei Materialersparnis erreicht.

Ergänzend wird hierbei vorgeschlagen, daß der Federteller aus flexibel gewalztem Flachmaterial mit in einer Richtung variabler Wandstärke hergestellt ist, das abschließend gestanzt und/oder beschnitten und verformt wird. Damit ist eine kostengünstige Herstellart auch für den Federteller bereitgestellt.

Weitere günstige Ausführungsformen sind in weiteren Unteransprüchen beschrieben, auf die hiermit Bezug genommen wird.

Bevorzugte Ausführungsbeispiele der Erfindung sind in den Zeichnungen dargestellt und werden nachstehend beschrieben.
- Figur 1: zeigt den Rohrkörper eines erfindungsgemäßen Federbeinrohres in einer ersten Ausführung als Einzelheit in verschiedenen Darstellungen
a) in einer ersten Seitenansicht
b) in einer zweiten Seitenansicht
c) in einer dritten Seitenansicht
d) in einer ersten Axialansicht
e) in einer zweiten Axialansicht
f) im Schnitt A-A nach Darstellung b
g) im Schnitt B-B nach Darstellung c
h) in einer isometrischen Schrägansicht.
- Figur 2: zeigt einen Längsschnitt ähnlich Figur 1f vergrößert und in gebrauchsgerechter Position;
- Figur 3: zeigt einen Längsschnitt ähnlich Figur 1g vergrößert und in gebrauchsgerechter Position;
- Figur 4: zeigt einen Federteller eines erfindungsgemäßen Federbeinrohres als Einzelheit in verschiedenen Darstellungen
a) in Draufsicht in Richtung der Durchgangsöffnung
b) in einer ersten Seitenansicht
c) in einer zweiten Seitenansicht
d) in einer dritten Seitenansicht
e) in einer vierten Seitenansicht
f) in Unteransicht in Richtung der Durchgangsöffnung
g) im Schnitt A-A nach Figur 1 a
h) im Schnitt B-B nach Figur 1 a
i) in einer isometrischen Schrägansicht;

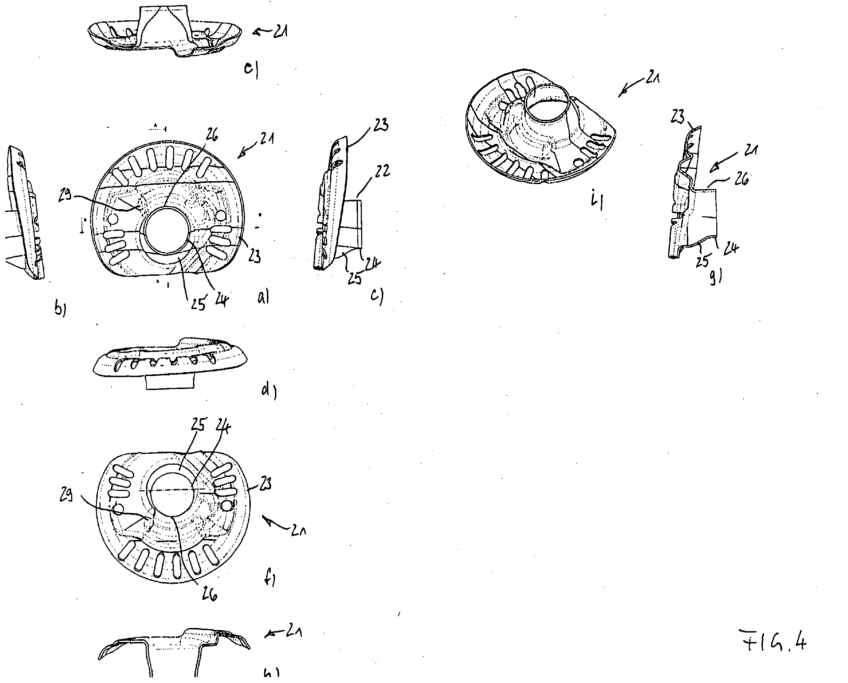

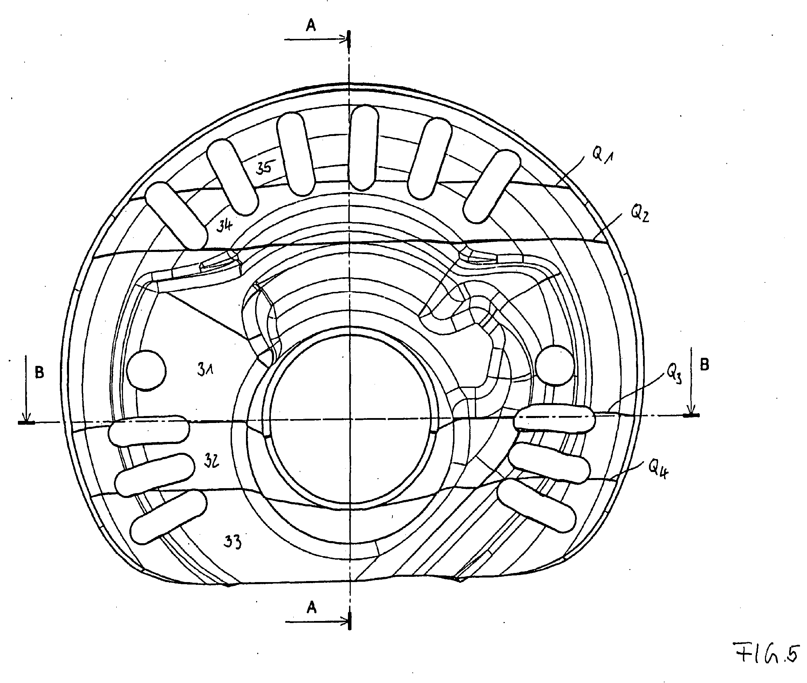

- Figur 5: zeigt die Draufsicht nach Figur 4a vergrößert;

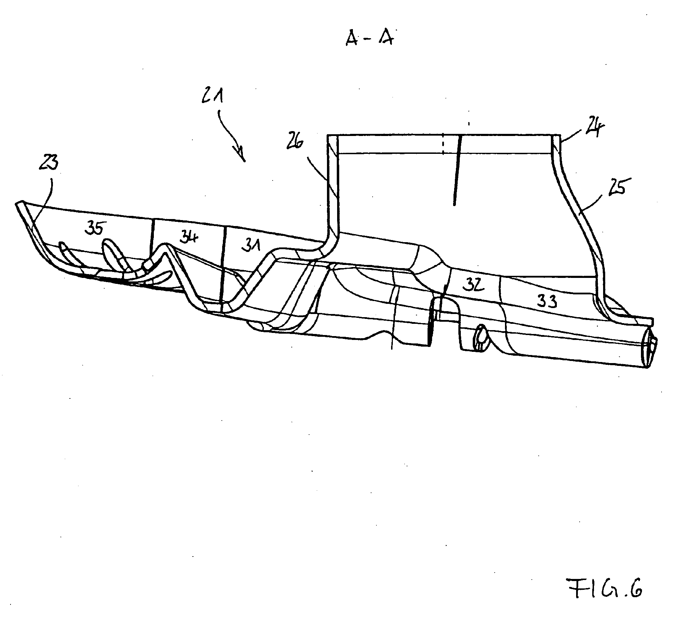

- Figur 6: zeigt den Schnitt nach Figur 4g vergrößert;

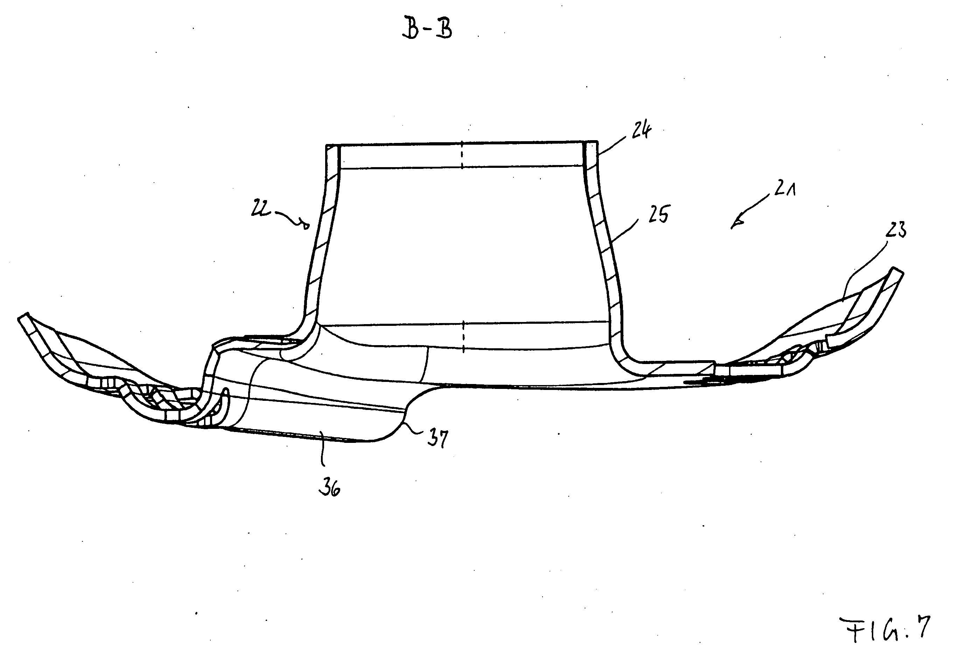

- Figur 7: zeigt den Schnitt nach Figur 4h vergrößert;

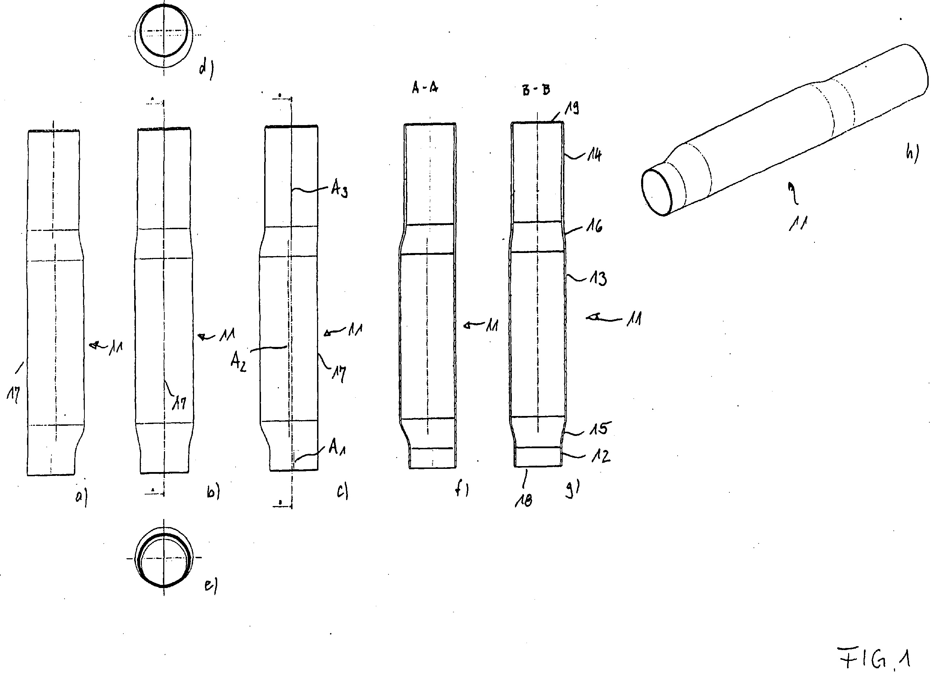

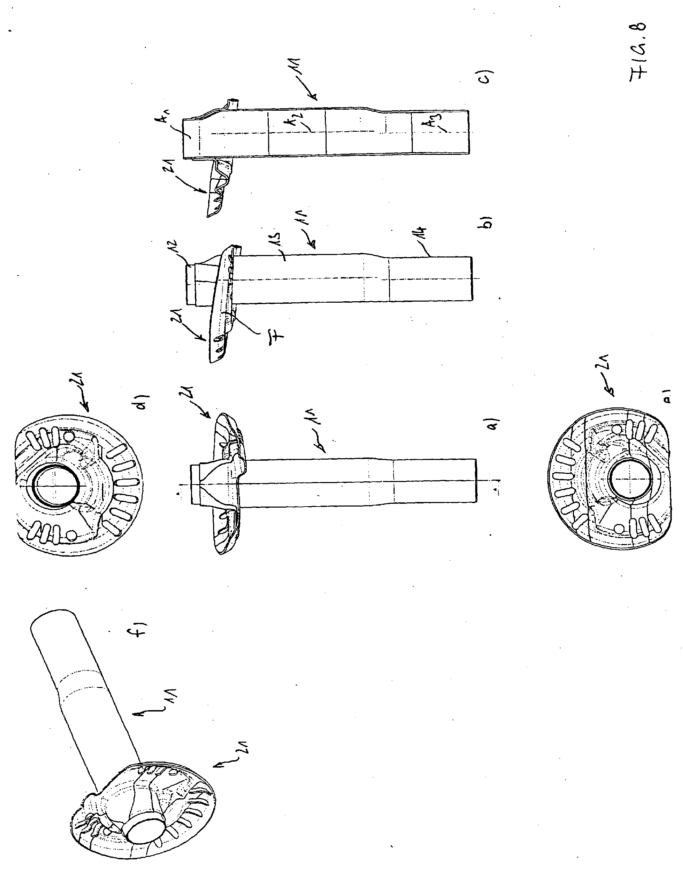

- Figur 8: zeigt ein erfindungsgemäßes Federbeinrohr nach Figur 1 im Zusammenbau mit einem Federteller nach Figur 4
a) in einer ersten Seitenansicht
b) in einer zweiten Seitenansicht
c) in Draufsicht in Richtung der Längsachse
d) in Untersicht in Richtung der Längsachse
e) im Schnitt A-A nach Figur 8a
f) in einer isometrischen Schrägansicht;

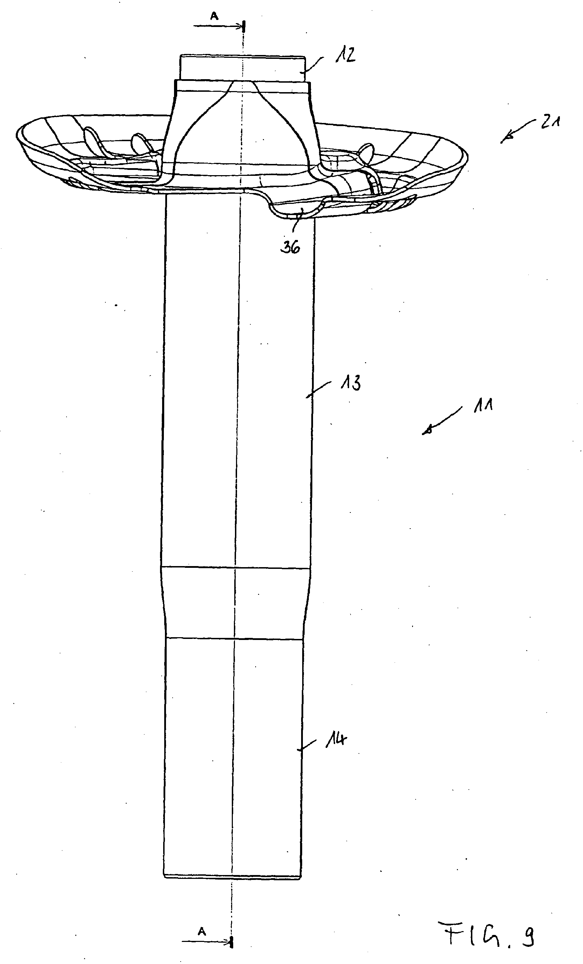

- Figur 9: zeigt die Ansicht nach Figur 8a vergrößert;

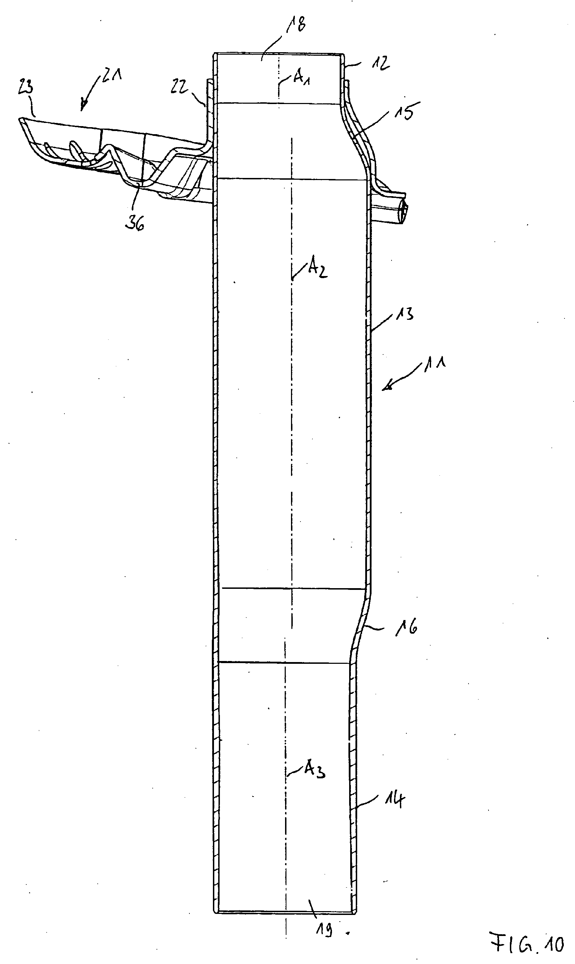

- Figur 10: zeigt den Schnitt nach Figur 8e vergrößert;

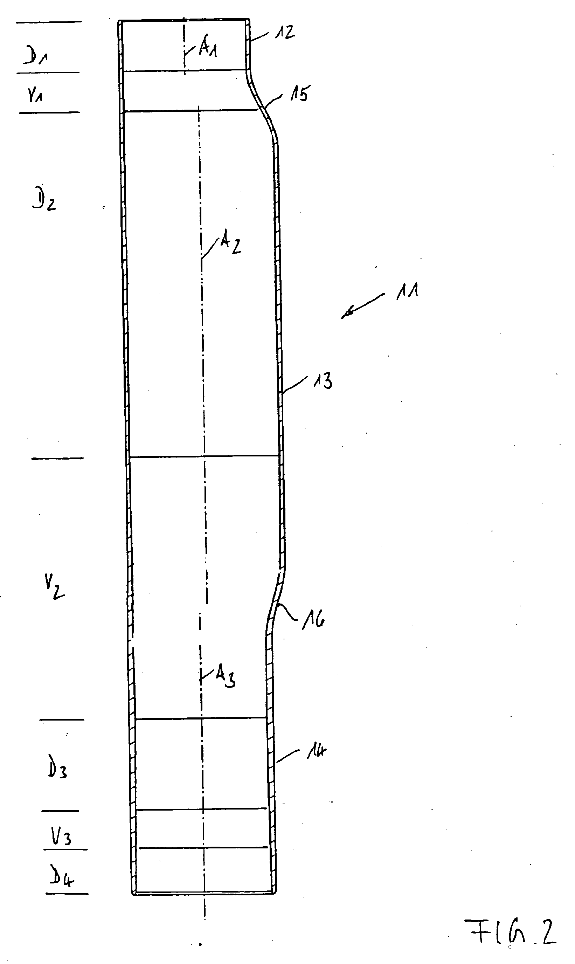

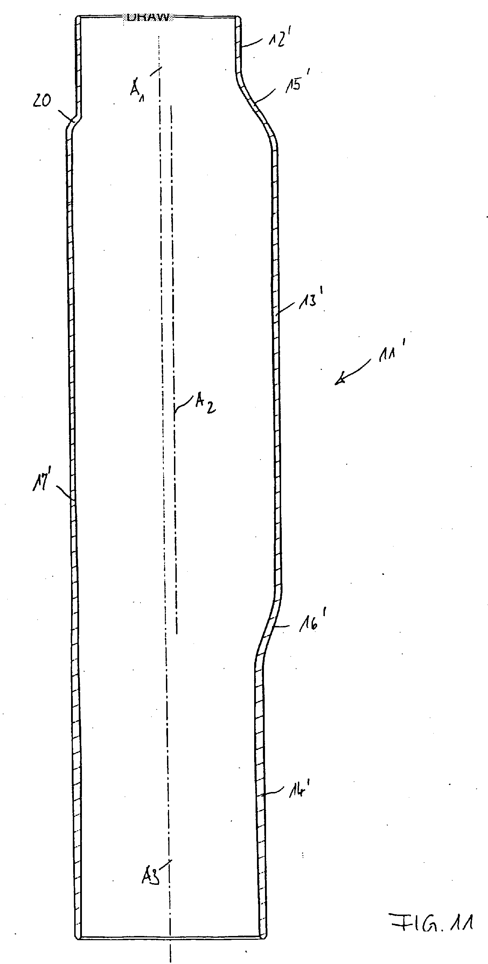

- Figur 11: zeigt ein Federbeinrohr im Längsschnitt ähnlich Figur 2 in einer abgewandelten Ausführungsform;

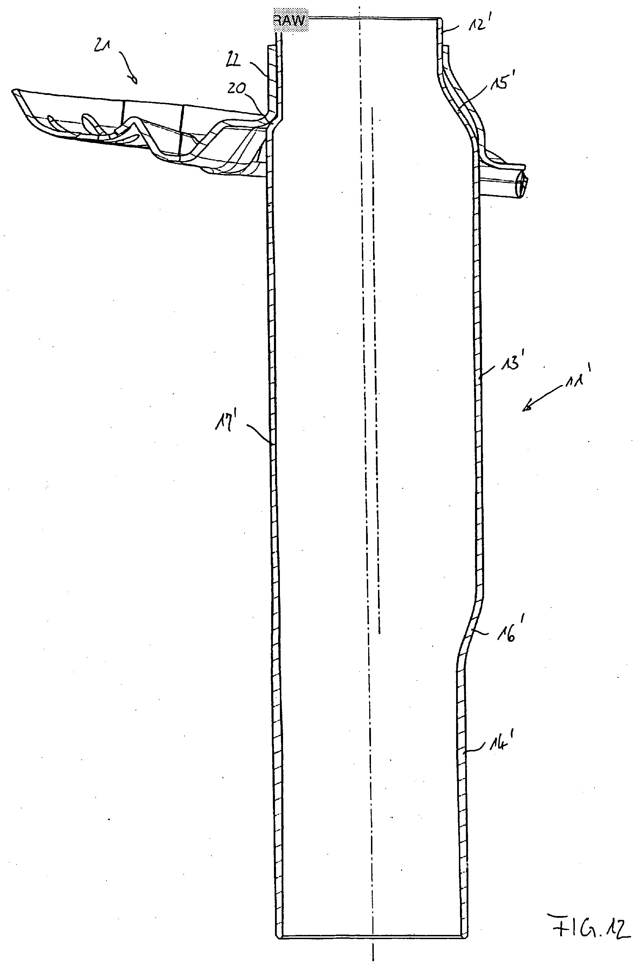

- Figur 12: zeigt ein erfindungsgemäßes Federbeinrohr nach Figur 11 im Zusammenbau mit einem Federteller nach Figur 4 in einer Darstellung ähnlich Figur 9.

In Figur 1 ist ein Rohrkörper 11 eines erfindungsgemäßen Federbeinrohres in den verschiedenen obenbezeichneten Darstellungen gezeigt. Diese werden nachstehend gemeinsam beschrieben. Der Rohrkörper 11 ist gegenüber der späteren Einbaulage um 180° gedreht, d.h. das oben dargestellte Rohrende weist in eingebautem Zustand nach unten und wird mit einem Boden verschlossen, während das unten dargestellte Rohrende in eingebautem Zustand nach oben weist und offen bleibt. Es ist ein Rohrkörper 11 erkennbar, der aus drei zylindrischen Rohrabschnitten 12, 13, 14 besteht, die durch schräg konische Übergangsabschnitte 15, 16 miteinander verbunden sind. Es ist ein erster Zylinderabschnitt 12 mit kleinem Außendurchmesser, ein zweiter Zylinderabschnitt 13 mit größerem Außendurchmesser und ein dritter Zylinderabschnitt 14 mit wiederum kleinerem Außendurchmesser erkennbar, wobei der Außendurchmesser des Rohrabschnitts 14 vom Außendurchmesser des Rohrabschnitts 12 geringfügig abweicht. Die Rohrabschnitte 12, 13 und 14 haben zueinander parallel versetzte Längsachsen, wobei die Längsachse A1 des ersten Rohrabschnitts 12, 13 und die Längsachse A2 des zweiten Rohrabschnitts 13 in entgegengesetzter Richtung parallel zur Längsachse A3 des dritten Rohrabschnitts 14 versetzt sind.

Zwischen den Rohrabschnitten 11 und 12 ist ein schief konischer Übergangsabschnitt 15 gezeigt, zwischen den Rohrabschnitten 13 und 14 ein schief konischer Rohrabschnitt 16.

Mit schief konisch wird hiermit definiert, daß die Außendurchmesser dieser Rohrabschnitte in Längsrichtung stetig und mit gleicher Rate zunehmen bzw. abnehmen, während die die Mittelpunkte verbindende Mittelachse einen Winkel mit einer der Mantellinien bildet, die parallel zu den Längsachsen der anschließenden zylindrischen Rohrabschnitte ist.

Der Versatz der Längsachsen A1, A2, A3 der zylindrischen Rohrabschnitte 12, 13, 14 ist derartig zueinander, daß die Längsachsen eine gemeinsame Ebene aufspannen und, bezogen auf die Längsachse A3 des Zylinderabschnitts 12 mit dem mittleren Außendurchmesser, die Längsachse A2 des Zylinderabschnitts mit größtem Au-ßendurchmesser in einer ersten Richtung parallel versetzt ist und die Längsachse A1 des Zylinderabschnitts mit kleinstem Außendurchmesser in einer zweiten entgegengesetzten Richtung axial versetzt ist. Die erste Öffnung des Rohrkörpers ist mit 18, die zweite Öffnung mit 19 bezeichnet.

Entlang der in Darstellung 1 a links gezeigten, in Darstellung 1 c und f rechts gezeigten durchgehend geraden Mantellinie 17 des Rohrkörpers 11 zieht sich eine nicht besonders bezeichnete Schweißnaht entlang, an der das zunächst in Längsrichtung flachgewalzte, dann entlang der Längskanten beschnittene und dann rundgebogene Material des Rohres verschweißt ist. Die Wandstärke des flexibel gewalzten Materials und damit die Wandstärke des Rohres nimmt in der Zeichnung von oben nach unten ab, d.h. in Einbaulage von oben nach unten zu, was anhand der folgenden Figuren noch näher beschrieben wird.

In Darstellungen 1 a bis 1 c sind die äußeren Lichtkanten an den Übergängen von den Zylinderabschnitten zu den Konusabschnitten jeweils umlaufend gezeichnet. In gleicher Weise sind in den Darstellungen f und g die inneren Lichtkanten zwischen den Übergängen von den Zylinderabschnitten zu den Konusabschnitten jeweils umlaufend gezeichnet. Tatsächlich sind die Übergänge leicht gerundet.

In Figur 2 ist das Rohr in der Darstellung nach Figur 1f in bestimmungsgemäßer Position gezeigt. In dieser Figur ist erkennbar, daß der Rohrkörper 11 aus Längsabschnitten unterschiedlicher Wandstärke mit grob unterschieden vier verschiedenen Dickenzonen mit konstanter Dicke und drei jeweils dazwischenliegenden Übergangsabschnitten besteht. Eine erste geringste Dicke D1 umfaßt den ersten Zylinderabschnitt 12. Ein Teil des Übergangsabschnitts 15 weist eine zunehmende veränderliche Dicke V1 auf. Eine zweite Dicke D2 umfaßt den Rest des Übergangsabschnitts 15 und etwa zwei Drittel der Länge des mittleren Zylinderabschnitts 13. Der Rest des Zylinderabschnitts 13, der Übergangsabschnitt 16 sowie, etwa ein Drittel der Länge des Zylinderabschnitts 14 haben eine stetig zunehmende veränderliche Dicke V2. Eine dritte Dicke D3 umfaßt den mittleren Bereich des Zylinderabschnitts 14. Es schließt sich ein Abschnitt mit einer abnehmenden veränderlichen Dicke V3 an. Endlich schließt sich ein Abschnitt mit einer vierten Dicke D4 an, die geringer als D3 ist und etwa das letzte Drittel des letzten Zylinderabschnitts 14 umfaßt. Beispielhaft sind für die hier genannten Dickenzonen D1, D2, D3, D4 in der genannten Reihenfolge etwa die Abfolge von 1,35 mm, 1,5 mm, 2,5 mm und 2,35 mm zu nennen. Die Grenzen zwischen den Dickenzonen und den Übergangsabschnitten sind durch zwischen den Wänden verlaufende Querlinien markiert, während die Übergänge zwischen Zylinderabschnitten und Konusabschnitten nicht markiert sind.

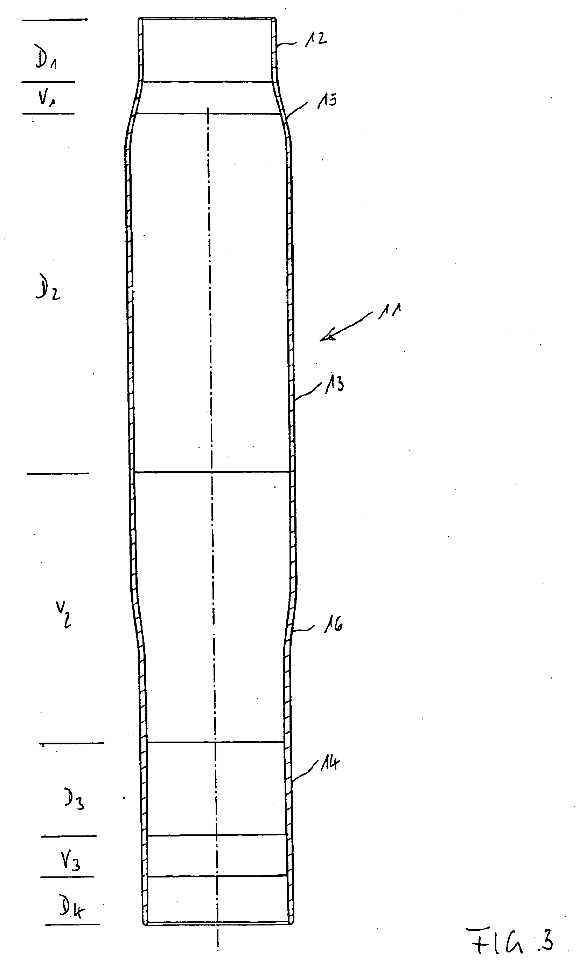

In Figur 3 ist die Darstellung nach Figur 1g vergrößert gezeigt. Auch hier sind die Grenzen zwischen den Dickenzonen und den Übergangsabschnitten mit zwischen den Wänden verlaufenden Querlinien bezeichnet, während die Übergänge zwischen zylindrischen Abschnitten und Konusabschnitten hier nicht durch Sichtkanten betont sind. Im übrigen wird auf die Beschreibung der Figur 2 verwiesen.

In Figur 4 ist ein Federteller 21, der auf ein Rohr nach den Figuren 1 bis 3 aufgeschoben werden und mit diesem verbunden werden kann, als Einzelheit in verschiedenen Darstellungen gezeigt, die oben genannt sind. Die einzelnen Darstellungen werden nachstehend gemeinsam beschrieben.

Der Federteller 21 besteht aus Blech und umfaßt einen rohrartigen Sitzabschnitt 22 und einen diesen umgebenden Tellerabschnitt 23, deren Mitten einen nicht besonders eingezeichneten Versatz zueinander haben. Der Sitzabschnitt 22 umfaßt im einzelnen einen Zylinderabschnitt 24, der im wesentlichen spielfrei auf den ersten Zylinderabschnitt 12 des Rohres 11 aufschiebbar ist, sowie einen schiefen Konusabschnitt 25, der formschlüssig auf dem Übergangskonus 15 des Rohres 11 aufsitzen kann. Sobald dieser Sitzkontakt hergestellt ist, ist eine axial abgestützte und verdrehfeste Verbindung gegeben, in der Form, daß die Schnittfläche A-A aus Figur 1 mit der Schnittlinie A-A aus dieser Figur 4 übereinstimmt. Zylinderabschnitt 24 und Konusabschnitt 25 haben eine gemeinsame lineare Mantellinie 26.

An den Sitzabschnitt 22 schließt sich in bestimmungsgemäßer Position nach unten der Federteller 23 an, der weitgehend symmetrisch zur Schnittebene A-A ausgebildet ist, jedoch unsymmetrisch zu der dazu senkrechten Schnittebene B-B. Der Federteller 23 schließt sich an den Konusabschnitt 25 des Sitzabschnitts 21 umlaufend an und ist ringschalenförmig so gewölbt, daß ein äußerer Rand in Richtung zum freien Ende des Sitzabschnitts 22 weist. Die nichtdargestellte Mitte des Federtellers, der etwa kreisförmig begrenzt ist, ist bezogen auf die Mitte des Sitzabschnitts 22 in Richtung zur geraden Mantellinie 26 hin versetzt. Auf der Gegenseite zur radialen Mantellinie 17 bezogen auf die Längsachse A1 ist der Federteller etwa geradlinig beschnitten.

Der Federteller 21 weist auf drei Gruppen aufgeteilte Radialschlitze 27 und zwei quer zur Schnittebene A-A positionierte Löcher 28 auf. Im übrigen weist der Federteller einen ausgeformten Drehanschlag 29 für eine Schraubenfeder auf, die sich auf dem Federteller abstützen soll.

In Figur 5 ist der Federteller nach Figur 4a in vergrößerter Darstellung gezeigt. Hierbei sind die folgenden Einzelheiten erkennbar.

Der Federteller wird aus gewalztem Flachmaterial nach dem Walzen ausgestanzt, wobei zugleich die Schlitze und Löcher gestanzt werden. Danach wird der Federteller durch Tiefziehen in seine endgültige Form gebracht. Durch Querlinien Q1, Q2, Q3, Q4, die quer zur Schnittebene A-A verlaufen, sind die Grenzen zwischen Bereichen unterschiedlicher Dicke dargestellt, womit angezeigt wird, daß der Federteller aus flexibel gewalztem Material besteht, dessen Walzrichtung in Richtung der Schnittebene A-A liegt. Hierbei ist ein mittlerer Bereich 31 mit konstanter größter Wandstärke ausgebildet, ein Übergangsbereich 32 mit abnehmender Wandstärke und ein Bereich 33 mit einer ersten reduzierten konstanten Wandstärke, sowie ein Übergangsbereich 34 mit abnehmender Wandstärke und ein Bereich 35 mit einer in der anderen Richtung liegenden zweiten reduzierten konstanten Wandstärke.

In Figur 6 ist der Federteller im Schnitt nach Figur 4g gezeigt. Gleiche Einzelheiten sind mit gleichen Bezugsziffern bezeichnet. Der Federteller ist hierbei in der einbaugerechten Lage dargestellt, so daß leicht nachvollziehbar ist, wie der Zylinderabschnitt 24 und der Konusabschnitt 25 auf den oberen Zylinderabschnitt 12 und den ersten Übergangsabschnitt 15 des Rohres nach Figur 1 aufgeschoben werden kann.

In Figur 7 ist der Federteller nach Figur 4h, jedoch in bestimmungsgemäßer Lage gezeigt. Hierbei ist nachvollziehbar, wie der Federteller in der hier gezeigten Position auf das Rohr nach Figur 3 aufgeschoben werden kann, um einen festen Sitz zu bilden. Weiterhin ist eine Vertiefungsrille 36 im Tellerabschnitt 23 für das Ende einer Schraubenfeder erkennbar, die sich auf dem Federteller abstützen soll und an einem Endanschlag 37 sich in Umfangsrichtung abstützt. Dieser Endanschlag 37 soll in einem Bereich größter Wandstärke liegen.

In Figur 8 ist ein erfindungsgemäßes Federbeinrohr, das die Einzelteile Rohrkörper 11 nach Figur 1 und Federteller 21 nach Figur 4 umfaßt, im Zusammenbau dargestellt. Die einzelnen obengenannten Darstellungen werden nachstehend gemeinsam beschrieben. Es ist erkennbar, wie der Federteller 21 mit seinem Sitzabschnitt 22 auf dem Zylinderabschnitt 12 und dem Konusabschnitt 15 in Axialrichtung formschlüssig aufsitzt, wobei durch die schiefe Konusform auch ein Formschluß in Drehrichtung gebildet ist. Zwischen Federteller 21 und Rohrkörper 11 kann ein Preßsitz gebildet sein; zusätzliche Punktschweißverbindungen oder dergleichen sind möglich. Eine Auflageebene F des Federtellers ist erkennbar geneigt zu den Längsachsen A1 bis A3 des Rohrkörpers eingezeichnet, womit die Lage der aufliegenden Schraubenfeder relativ zur Lage des Dämpferrohres vorgegeben ist. Die Schraubenfeder kann eine gerade Mittelachse, aber auch eine C-förmig oder S-förmig verlaufende Mittelachse haben.

Am mittleren Zylinderabschnitt 13 und/oder am unteren Zylinderabschnitt 14 des Rohres können aus Blech geformte Laschen oder Flansche angeschlagen werden, mit denen das Federbeinrohr an einem Radträger oder an Längs- oder Querlenkern eines Kraftfahrzeuges angeschraubt werden kann. Die untere Öffnung 19 ist mit einem hier nicht dargestellten Deckel zu verschließen, der eingesetzt und verpreßt oder verschweißt wird. Auf diesem Deckel kann sich ein Innenrohr des fertigmontierten Federbeines abstützen. Im Bereich des ersten Zylinderabschnitts 12 sind Dichtungsmittel für das Innenrohr vorzusehen. Insoweit ist nach dem Zuschweißen des Rohres 11 gegebenenfalls der Zylinderabschnitt 14 zur Glättung der Schweißnaht innen mechanisch zu bearbeiten.

In Figur 9 ist das Federbeinrohr nach Figur 8a in vergrößerter Darstellung gezeigt. Gleiche Einzelheiten sind mit gleichen Bezugsziffern wie in den vorangegangenen Figuren bezeichnet. Wie in den Figuren 1b und 4a sind nur die Übergänge zwischen Zylinderabschnitten und Konusabschnitten durch Sichtkanten bezeichnet. Der Federteller 21 läßt die zum oberen Ende offene Vertiefungsrille 36 zur Aufnahme einer Schraubenfeder erkennen. Die bezeichnete Schnittebene A-A nimmt die Längsachsen der Zylinderabschnitte 12, 13, 14 auf.

In Figur 10 ist das Federbeinrohr im Schnitt A-A nach Figur 9 gezeigt. Es wird die durchgehend gerade Mantellinie 17 erkennbar, an der die durchgehende Mantellinie 26 des Sitzabschnittes 22 parallel anliegt. Es sind die entsprechenden Sichtkanten wie in Figur 9 eingezeichnet.

In Figur 11 ist ein Rohrkörper 11' in einer abgewandelten Ausführung in einem Längsschnitt dargestellt, wobei auch dieses Rohr an den Enden Zylinderabschnitte 12', 14' geringeren Außendurchmessers und einen mittleren Zylinderabschnitt 13' größeren Außendurchmessers aufweist. Die Längsachsen A1, A3 der beiden Zylinderabschnitte an den Enden des Rohres fluchten hierbei miteinander, während die Längsachse A2 des Zylinderabschnittes 13' gegenüber den erstgenannten versetzt ist. Die Zylinderabschnitte sind durch Übergangsabschnitte 15', 16', wie bereits mehrfach beschrieben, miteinander verbunden.

Da der Zylinderabschnitt 12' geringeren Außendurchmesser hat als der Zylinderabschnitt 14', ergibt sich eine fluchtende Mantellinie 17' nur im Bereich des mittleren Zylinderabschnitts 13' des Übergangsabschnittes 16' und des Zylinderabschnittes 14'. Dagegen bildet sich am Übergangsabschnitt 15' zum Zylinderabschnitt 12' eine Stufe 20 aus.

In Figur 12 ist ein Federbeinrohr als Zusammenbau eines Rohrkörpers 11' nach Figur 11 mit einem Federteller 21 gezeigt, der der Ausführung nach den Figuren 4 bis 7 entspricht. Gleiche Einzelheiten des Rohres sind mit gleichen Bezugsziffern wie in der Figur 11 bezeichnet. Es ist erkennbar, daß der Federteller 21 unterhalb des Sitzabschnittes 22 axial formschlüssig auf der Stufe 20 des Übergangsabschnittes 15' aufsitzt, so daß ein verbesserter axialer Formschluß gegeben ist, der erhöhte Axialkräfte aufnehmen kann.

Das in den Zeichnungen dargestellte Federbeinrohr ist bei geringen Herstellkosten und uneingeschränkten Festigkeitswerten wesentlich leichter als herkömmliche Erzeugnisse.

### Bezugszeichenliste

- 11: Rohrkörper
- 12: Zylinderabschnitt
- 13: Zylinderabschnitt
- 14: Zylinderabschnitt
- 15: Übergangskonus
- 16: Übergangskonus
- 17: Mantellinie
- 18: Öffnung
- 19: Öffnung
- 20: Stufe
- 21: Federteller
- 22: Sitzabschnitt
- 23: Tellerabschnitt
- 24: Zylinderabschnitt
- 25: Konusabschnitt
- 26: Mantellinie
- 27: Schlitz
- 28: Loch
- 29: Drehanschlag

- 31: Dickenzone
- 32: Dickenzone
- 33: Dickenzone
- 34: Dickenzone
- 35: Dickenzone
- 36: Vertiefungsrille
- 37: Drehanschlag

## Patentansprüche

1. Federbeinrohr, insbesondere äußeres Behälterrohr, für ein Federbein, mit einem Rohrkörper (11), der an einem ersten Ende eine Öffnung (19) aufweist, die durch einen Boden verschließbar ist, und am anderen Ende eine Öffnung (18) aufweist und mit Abstand zu dieser einen aufgeschobenen Federteller (21) trägt,
wobei der Rohrkörper (11) aus flexibel gewalztem Flachmaterial mit in Längsrichtung variabler Wandstärke, das quer zur Längsrichtung zum Rohr umgeformt und in Längsrichtung verschweißt ist, hergestellt ist,
**dadurch gekennzeichnet,**
**daß** der Rohrkörper (11) zumindest zwei Zylinderabschnitte (12, 13, 14) unterschiedlichen Außendurchmessers aufweist, zwischen denen jeweils Übergangsabschnitte (15, 16) liegen,
wobei die Achsen (A1, A2, A3) der zumindest zwei Zylinderabschnitte (12, 13, 14) unterschiedlichen Außendurchmessers so gegeneinander versetzt sind, daß die Zylinderabschnitte (12, 13, 14) jeweils eine Mantellinie (17) in untereinander fluchtender Anordnung aufweisen.

2. Federbeinrohr nach Anspruch 1,
**dadurch gekennzeichnet,**
**daß** die Wandstärke des Rohrkörpers (11) im wesentlichen vom verschließbaren unteren Ende mit der Öffnung (19) in Richtung zur Öffnung (18) abnimmt.

3. Federbeinrohr nach Anspruch 2,
**dadurch gekennzeichnet,**
**daß** die Wandstärke des Rohrkörpers (11) im wesentlichen derart abnimmt, daß der Verlauf des Widerstandsmoments in Längsrichtung dem Verlauf der Biegebelastungen im Betrieb entspricht.

4. Federbeinrohr nach einem der Ansprüche 1 bis 3,
**dadurch gekennzeichnet,**
**daß** der Rohrkörper (11) an den Enden Zylinderabschnitte (12, 14) kleineren Außendurchmessers und einen dazwischenliegenden Zylinderabschnitt (13) größeren Außendurchmessers aufweist.

5. Federbeinrohr nach einem der Ansprüche 1 bis 4,
**dadurch gekennzeichnet,**
**daß** eine Schweißnaht entlang der zueinander fluchtenden Mantellinien (17) der Zylinderabschnitte (12, 13, 14) unterschiedlichen Durchmessers verläuft.

6. Federbeinrohr nach einem der Ansprüche 1 bis 5,
**dadurch gekennzeichnet,**
**daß** die Achsen (A1, A3) der an den Enden liegenden Zylinderabschnitte (12, 14) kleineren Außendurchmessers miteinander fluchten.

7. Federbeinrohr nach Anspruch 6,
**dadurch gekennzeichnet,**
**daß** einer der an den Enden liegenden Zylinderabschnitte (12, 14) einen kleineren Außendurchmesser hat als der andere und eine umlaufende Durchmesserstufe (20) mit dem dazwischenliegenden Zylinderabschnitt (13) größeren Außendurchmessers bildet.

8. Federbeinrohr nach einem der Ansprüche 6 oder 7,
**dadurch gekennzeichnet,**
**daß** die Schweißnaht in einer Radialebene durch die miteinander fluchtenden Achsen (A1, A3) verläuft.

9. Federbeinrohr nach einem der Ansprüche 1 bis 8,
**dadurch gekennzeichnet,**
**daß** der Federteller (21) aus einem stützenförmigen Sitzabschnitt (22) und einen davon anschließenden Tellerabschnitt (23) besteht.

10. Federbeinrohr nach einem der Ansprüche 1 bis 9,
daß der Federteller (21) aus Material unterschiedlicher Wandstärke besteht, wobei eine größte Wandstärke im Bereich der Verbindung des Federtellers (21) mit dem Rohrkörper (11) vorliegt.

11. Federbeinrohr nach einem der Ansprüche 1 bis 10,
**dadurch gekennzeichnet,**
**daß** der Federteller (21) aus flexibel gewalztem Flachmaterial mit in einer Richtung variabler Wandstärke hergestellt ist.

12. Federbeinrohr nach einem der Ansprüche 1 bis 11,
**dadurch gekennzeichnet,**
**daß** sich der Federteller (21) auf einem Übergangsbereich (15) des Rohrkörpers (11) axial und in Drehrichtung formschlüssig abstützt.

13. Federbeinrohr nach einem der Ansprüche 1 bis 12,
**dadurch gekennzeichnet,**
**daß** eine Auflageebene (F) des Federtellers (21) unter einem von 90° abweichenden Winkel zu den Längsachsen (A1, A2, A3) des Rohrkörpers (11) geneigt ist.

14. Federbeinrohr nach einem der Ansprüche 1 bis 13,
**dadurch gekennzeichnet,**
**daß** der Federteller (21) im wesentlichen kreisförmig am Umfang begrenzt ist, wobei die Mitte des Federtellers (21) gegenüber der Mitte des Rohrkörpers (11) versetzt ist.

15. Federbeinrohr nach einem der Ansprüche 1 bis 14,
**dadurch gekennzeichnet,**
**daß** die Mitte des Federtellers (21) von der Mitte des Rohrkörpers (11) betrachtet in Richtung zur geraden Mantellinie (17) hin verschoben angeordnet ist.

16. Federbeinrohr nach einem der Ansprüche 1 bis 15,
**dadurch gekennzeichnet,**
**daß** der Federteller (21) bezogen auf die Mitte des Rohrkörpers (11) auf der der geraden Mantellinie (17) gegenüberliegenden Seite gerade quer begrenzt ist.

## Claims

1. A spring strut tube, more particularly an outer reservoir tube for a spring strut, having a tubular member (11) which, at a one end, comprises an opening (19) that can be closed by a bottom part and which, at the other end, comprises an aperture (18) and, at a distance therefrom, carries a slid-on spring plate (21),
wherein, the tubular member (11) is produced from a flexibly rolled flat material having a variable wall thickness in the longitudinal direction which is formed into a tube in a direction transversely to the longitudinal direction and which is welded in the longitudinal direction,
**characterised in**
**that** the tubular member (11) comprises at least two cylindrical portions (12, 13, 14) of different outer diameters between which there are positioned transition portions (15, 16),
wherein the axes (A1, A2, A3) of the at least two cylindrical portions (12, 13, 14) of different outer diameters are offset relative to one another such that the cylindrical portions (12, 13, 14) each comprise a mantle line (17), which mantle lines (17) are arranged so as to be aligned relative to one another.

2. A spring strut tube according to claim 1,
**characterised in**
**that** the wall thickness of the tubular member (11) decreases substantially from the closeable lower end, which comprises the opening (19), towards the aperture (18).

3. A spring strut tube according to claim 2,
**characterised in**
**that** the wall thickness of the tubular member (11) decreases substantially such that the course of the resistance moment in the longitudinal direction corresponds to the course of the bending loads under operational conditions.

4. A spring strut tube according to any one of claims 1 to 3,
**characterised in**
**that** the tubular member (11), at its ends, comprises cylindrical portions (12, 14) with smaller outer diameters and an intermediate cylindrical portion (13) with a greater outer diameter.

5. A spring strut tube according to any one of claims 1 to 4,
**characterised in**
**that** a weld extends along the aligned mantle lines (17) of the cylindrical portions (12, 13, 14) of different diameters.

6. A spring strut tube according to any one of claims 1 to 5,
**characterised in**
**that** the axes (A1, A3) of the cylindrical portions (12, 14) having the smaller outer diameters and being positioned at the ends are aligned relative to one another.

7. A spring strut tube according to claim 6,
**characterised in**
**that** one of the cylindrical portions (12, 14) positioned at the ends comprises a smaller outer diameter than the other one and forms a continuous circumferential diameter step (20) with the intermediate cylindrical portion (13) having a greater outer diameter.

8. A spring strut tube according to any one of claims 6 or 7,
**characterised in**
**that** the weld extends in a radial plane through the axes (A1, A3) which are aligned relative to one another.

9. A spring strut tube according to any one of claims 1 to 8,
**characterised in**
**that** the spring plate (21) is formed by a sleeve-shaped seat portion (22) and an adjoining plate portion (23).

10. A spring strut tube according to any one of claims 1 to 9,
**characterised in**
**that** the spring plate (21) consists of a material with a variable wall thickness, wherein the greatest wall thickness is provided in the region of the connection between the spring plate (21) and the tubular member (11).

11. A spring strut tube according to any one of claims 1 to 10,
**characterised in**
**that** the spring plate (21) is produced from a flexibly rolled flat material having a variable wall thickness in one direction.

12. A spring strut tube according to any one of claims 1 to 11,
**characterised in**
**that** the spring plate (21) is axially and rotationally form-fittingly supported on a transition region (15) of the tubular member (11).

13. A spring strut according to any one of claims 1 to 12,
**characterised in**
**that** a support plane (F) of the spring plate (21) is inclined at an angle relative to the longitudinal axes (A1, A2, A3) of the tubular member (11), which angle deviates from 90°.

14. A spring strut tube according to any one of claims 1 to 13,
**characterised in**
**that** the spring plate (21) is circumferentially delimited substantially circularly, wherein the centre of the spring plate (21) is offset relative to the centre of the tubular member (11).

15. A spring strut tube according to any one of claims 1 to 14,
**characterised in**
**that**, if viewed from the centre of the tubular member (11), the centre of the spring plate (21) is arranged so as to be displaced towards the straight mantle line (17).

16. A spring strut tube according to any one of claims 1 to 15,
**characterised in**
**that**, with reference to the centre of the tubular member (11), the spring plate (21), on the side positioned opposite the straight mantle line (17), is transversely delimited in a straight line.

## Revendications

1. Tube de jambe de suspension, notamment tube-réservoir extérieur, pour une jambe de suspension, comprenant un corps de tube (11) qui présente, au niveau d'une première extrémité, une ouverture (19) pouvant être fermée par un fond, et présente, au niveau de l'autre extrémité, une ouverture (18), et porte à distance de cette dernière, en y étant emmanché, une coupelle de ressort (21) ,
le corps de tube (11) étant fabriqué en un matériau plat obtenu par laminage flexible, avec une épaisseur de paroi variable dans la direction longitudinale, ce matériau plat étant transformé par formage pour former le tube et soudé dans la direction longitudinale, **caractérisé en ce que**
le corps de tube (11) présente au moins deux tronçons de cylindre (12, 13, 14) de diamètre extérieur différent entre lesquels se trouvent respectivement des tronçons de transition (15, 16),
les axes (A1, A2, A3) desdits au moins deux tronçons de cylindre (12, 13, 14) de diamètre extérieur différent étant mutuellement décalés les uns par rapport aux autres, de façon telle que les tronçons de cylindre (12, 13, 14) présentent chacun une génératrice (17) respective, ces génératrices étant agencées de manière à être mutuellement alignées les unes avec les autres.

2. Tube de jambe de suspension selon la revendication 1, **caractérisé en ce que** l'épaisseur de paroi du corps de tube (11) diminue essentiellement à partir de l'extrémité inférieure avec l'ouverture (19) pouvant être fermée, en direction de l'ouverture (18).

3. Tube de jambe de suspension selon la revendication 2, **caractérisé en ce que** l'épaisseur de paroi du corps de tube (11) diminue sensiblement de manière telle que l'évolution du moment résistant dans la direction longitudinale corresponde à l'évolution des sollicitations de flexion en fonctionnement.

4. Tube de jambe de suspension selon l'une des revendications 1 à 3,
**caractérisé en ce que** le corps de tube (11) présente aux extrémités, des tronçons de cylindre (12, 14) de diamètre extérieur plus faible, et, situé entre ceux-ci, un tronçon de cylindre (13) de diamètre extérieur plus grand.

5. Tube de jambe de suspension selon l'une des revendications 1 à 4, **caractérisé en ce qu'**un joint soudé s'étend le long des génératrices (17) mutuellement alignées des tronçons de cylindre (12, 13, 14) de diamètre différent.

6. Tube de jambe de suspension selon l'une des revendications 1 à 5,
**caractérisé en ce que** les axes (A1, A3) des tronçons de cylindre (12, 14) de diamètre extérieur plus faible situés aux extrémités, sont alignés l'un avec l'autre.

7. Tube de jambe de suspension selon la revendication 6, **caractérisé en ce que** l'un des tronçons de cylindre (12, 14) situés aux extrémités, a un diamètre extérieur plus faible que l'autre, et forme un étagement de diamètre (20) périphérique, avec le tronçon de cylindre (13) intermédiaire de diamètre plus grand.

8. Tube de jambe de suspension selon l'une des revendications 6 ou 7,
**caractérisé en ce que** le joint soudé s'étend dans un plan radial passant par les axes (A1, A3) mutuellement alignés.

9. Tube de jambe de suspension selon l'une des revendications 1 à 8,
**caractérisé en ce que** la coupelle de ressort (21) est constituée par un tronçon de portée (22) en forme d'embout, et par un tronçon de coupelle (23) qui s'y raccorde.

10. Tube de jambe de suspension selon l'une des revendications 1 à 9,
**caractérisé en ce que** la coupelle de ressort (21) est constituée d'un matériau d'une épaisseur de paroi variable, une épaisseur de paroi la plus grande se situant dans la zone de la liaison de la coupelle de ressort (21) avec le corps de tube (11).

11. Tube de jambe de suspension selon l'une des revendications 1 à 10,
**caractérisé en ce que** la coupelle de ressort (21) est fabriquée en un matériau plat obtenu par laminage flexible présentant une épaisseur de paroi variable dans une direction.

12. Tube de jambe de suspension selon l'une des revendications 1 à 11,
**caractérisé en ce que** la coupelle de ressort (21) s'appuie par complémentarité de forme, axialement et dans la direction périphérique, sur une zone de transition (15) du corps de tube (11).

13. Tube de jambe de suspension selon l'une des revendications 1 à 12,
**caractérisé en ce qu'**une surface de réception d'appui (F) de la coupelle de ressort (21) est inclinée, selon un angle différent de 90°, par rapport aux axes longitudinaux (A1, A2, A3) du corps de tube (11).

14. Tube de jambe de suspension selon l'une des revendications 1 à 13,
**caractérisé en ce que** la coupelle de ressort (21) est sensiblement délimitée par une forme circulaire sur sa périphérie, le centre de la coupelle de ressort (21) étant décalé par rapport au centre du corps de tube (11).

15. Tube de jambe de suspension selon l'une des revendications 1 à 14,
**caractérisé en ce que**, vu à partir du centre du corps de tube (11), le centre de la coupelle de ressort (21) est agencé de manière décalée en direction de la génératrice rectiligne (17).

16. Tube de jambe de suspension selon l'une des revendications 1 à 15,
**caractérisé en ce que** la coupelle de ressort (21) est délimitée de manière rectiligne transversale sur le côté opposé à la génératrice rectiligne (17), en se référant au centre du corps de tube (11).
